# EUROPEAN PATENT SPECIFICATION

(11) **EP 2 739 097 B1**
(45) Date of publication and mention of the grant of the patent: **21.10.2015**
(21) Application number: 13194473.8
(22) Date of filing: 26.11.2013
(51) Int. Cl.: H04W 52/02, G06F 17/30

(54) **A mobile telecommunication device in a cellular-digital wireless telecommunication system and a method for operating thereof**
Mobile Telekommunikationsvorrichtung in einem zellular-digitalen Drahtlos-Telekommunikationssystem und Betriebsverfahren dafür
Dispositif de télécommunication mobile dans un système de télécommunication sans fil numérique cellulaire et son procédé de fonctionnement

(30) Priority: 28.11.2012 US 201213687814
(43) Date of publication of application: 04.06.2014
(73) Proprietor: SAP SE, 69190 Walldorf (DE)
(72) Inventor: Walter, Wolfgang, 69190 Walldorf (DE); von Duhn, Jörg, 69190 Walldorf (DE)
(74) Representative: Richardt Patentanwälte PartG mbB

(56) References cited:
- EP-A2- 1 515 512
- US-A1- 2005 071 698
- US-A1- 2007 061 331
- US-A1- 2007 066 364
- US-A1- 2008 300 967
- US-A1- 2009 248 828

## Description

### TECHNICAL FIELD

The disclosure relates to telecommunication systems, and particularly to a method for operating a mobile telecommunication device.

### Background

The ongoing trend in telecommunication is to provide mobile devices with enhanced performances that can be used in a digital wireless telecommunication framework. However, this requires reliable optimization techniques to ensure such performances.

US 2008/0300967 discloses a method for providing interactive Marketing, product/market research, contact access and usage tracking for wireless.

### Summary

It is an objective of embodiments of the invention to provide for a mobile telecommunication device, and a method. Said objective is solved by the subject matter of the independent claims. Advantageous embodiments are described in the dependent claims.

In one aspect, the invention relates to a method for operating a mobile telecommunications device in a cellular-digital wireless telecommunication system, the cellular digital wireless telecommunication system comprising a database that is connected to the mobile communications device via an access network of the cellular digital wireless telecommunication system; the mobile telecommunication device comprising a display and a memory; wherein the display operates in a default display mode. The method comprising:
- receiving at a graphical user interface displayed on the display a user input to perform a search in the database;
- generating, by a frontend module of the mobile telecommunication device, at least a first and second query using the user input;
- for each query of the first and second query:
   ∘ generating, by a backend module of the telecommunication device, a first and second data processing task, wherein the first data processing task comprises sending the query to the database using the access network and retrieving and storing the query results in the memory, wherein the second data processing task comprises monitoring the memory content for determining if the query results are available; and
   ∘ executing, by the backend module, the first and second data processing tasks in parallel;
- receiving, by the frontend module a message from the backend module indicating that at least one of the first and the second query results are available in the memory;
- determining, by the frontend module, a runtime delay for the at least one of the first and second queries corresponding to the at least one of the first and the second query results that are available in the memory, wherein the runtime delay comprises the elapsed time from the reception of the input until the at least one of the first and the second query results are displayed on the display;
- in case the runtime delay is higher than a predetermined maximum allowable delay configuring, by the frontend module, the display to operate in an energy saving display mode;
- displaying, by the frontend module, on the display at least a first and second display entities for displaying the first and second query results using the default display mode or the energy saving display mode in case the runtime delay is higher than the predetermined maximum allowable delay; and in parallel supplying the first and second query results to respective query result display entities.

The mobile telecommunication device is operated such that it displays the query results in a shorter time period compared to conventional methods in a default or energy saving mode.

These features may be advantageous as they may provide a controlled display of the query results on the display of the mobile telecommunication device. This may be achieved by speeding up the display process of multiple query results on the graphical user interface of the mobile telecommunication device while using the display in the energy saving mode that may be used when the process may not be fast enough e.g. this may be due to the fact that the mobile telecommunication device is running a high number of applications in parallel (overloaded) and thus saving energy may be required.

The term "display mode" as used herein refers to a mode or pattern of presenting query results and/or user interface elements (e.g. associated with the query results) on the display. Such mode or pattern may be obtained by controlling displaying functions of the graphical user interface and/or the display on which the graphical user interface is displayed. The default display mode refers to a display mode existing before applying the energy saving display mode and which may be different than the energy saving display mode.

According to one embodiment, displaying using the energy saving display mode comprises at least one of:
- using a paging mode function of the graphical user interface for displaying first and second display entities;
- using less power consuming colors in the graphical user interface; and
- lowering brightness level of the display.

A display entity may comprise a chart, graph and the like.

For example, using the paging mode comprises switching off the scrolling display function of the user interface. Supporting the scrolling display functions costs more energy in comparison with paging mode display of information e.g. using multiple pages.

According to one embodiment, the mobile telecommunication device is adapted to run an Advanced Business Application Programming, ABAP, wherein each of the first and second queries comprises an ABAP query.

According to one embodiment, the runtime delay comprises a memory access time, wherein the memory access time is the time required for reading, transmitting from the memory and displaying the at least one of the first and the second query results; wherein the memory access time is estimated using a ping mechanism.

The memory access time is the sum of the reading, transmitting and displaying time required respectively for reading, transmitting from the memory and displaying the at least one of the first and the second query results.

In another example, the ping mechanism may be used to estimate the transmitting time of the memory access time, while the reading and displaying times of the memory access time may be estimated using historical data of similar query requests of the at least one of the first and the second query and/or using simulation data simulating the method described above.

The runtime delay further comprises the time required from the reception of the input until the at least one of the first and the second query results is stored or available in the memory. This time may be measured by a timer of the mobile telecommunication device.

According to one embodiment, the mobile telecommunication device comprises a battery powered mobile device, wherein the maximum allowable delay is determined at runtime using the remaining lifetime of the battery.

According to one embodiment, the display is a touch sensitive display screen. According to one embodiment, the first and second data processing tasks are executed as an atomic operation.

In another aspect, the invention relates to a mobile telecommunication device in a cellular-digital wireless telecommunication system, the cellular digital wireless telecommunication system comprising a database that is connected to the mobile communications device via an access network of the cellular digital wireless telecommunication system; the mobile telecommunication device comprising a display, a memory, a frontend module and a backend module:
- the frontend module is adapted for receiving at a graphical user interface displayed on the display a user input to perform a search in the database;
- the frontend module is adapted for generating at least a first and second query using the user input;
- for each query of the first and second query:
   ∘ the backend module is adapted for generating a first and second data processing task, wherein the first data processing task comprises sending the query to the database using the access network and retrieving and storing the query results in the memory, wherein the second data processing task comprises monitoring the memory content for determining if the query results are available; and
   ∘ the backend module is adapted for executing the first and second data processing tasks in parallel;
- the frontend module is adapted for receiving a message from the backend module is adapted for indicating that at least one of the first and the second query results are available in the memory;
- the frontend module is adapted for determining a runtime delay for the at least one of the first and second queries corresponding to the at least one of the first and the second query results that are available in the memory, wherein the runtime delay comprises the elapsed time from the reception of the input until the at least one of the first and the second query results are displayed on the display;
- in case the runtime delay is higher than a predetermined maximum allowable delay the frontend module is adapted for configuring the display to operate in an energy saving display mode;
- the frontend module is adapted for displaying on the display at least a first and second display entities for displaying the first and second query results using the default display mode or the energy saving display mode in case the runtime delay is higher than the predetermined maximum allowable delay; and in parallel supplying the first and second query results to respective query result display entities.

In a general aspect, a user interface (UI) of a computer application (e.g., a business application) is configured or constructed to receive and display multiple query results in parallel.

In an aspect, the UI is configured or constructed block-by-block or element-by-element using design tools of a web application user interface technology (e.g., Web Dynpro for Java, or Web Dynpro ABAP, etc.) that are available commercially. The UI is supported by display logic and processes in a front end layer of the computer application. A separate back end layer of the computer application includes business logic, persistence of business objects, and processes to support functions (queries, report generation, analytics, etc.) of the computer application.

In an aspect, the computer application is configured to receive and store multiple query results in a shared memory. Both front end processes in the front end layer and back end processes in the back end layer of the computer application can independently access and retrieve the multiple query results stored in the shared memory via a service (e.g., an RFC service).

In a general aspect, the front end layer includes a "parallel" feeder functionality or process (e.g., a feeder component) that is configured to asynchronously read the multiple query results stored in the shared memory and to supply the read query results in parallel to a plurality of UI query result display entities.

In an aspect, the parallel feeder functionality or process for reading query results data in parallel is implemented centrally as a custom feeder class with logic to read data in the shared memory asynchronously. The custom feeder class logic can be coupled to a "ping" mechanism which can help determine latency or delay in the service connection to the shared memory. The custom feeder class may be configured so that after the process of reading query result data from shared memory is complete, the custom feeder class makes the read data available to the front end UI.

In a general aspect, a method is provided for displaying multiple query results in parallel on a user interface (UI) of a computer application. The computer application (e.g., a business application) may include a front end layer with functionality or processes supporting the UI and a separate back end layer with functionality or processes supporting application functions (e.g., business functions). The method includes providing a shared memory to store data results of multiple queries, and providing a front end component or process that is configured to asynchronously read the shared memory to retrieve the data results of the multiple queries as they become available. The front end component or process is configured to provide the retrieved data results of the multiple queries to respective query display entities in the user interface for display in parallel.

In a general aspect, a system includes at least one processor configured to execute database queries for a computer application and a user interface having a plurality of query display elements. Each query display element is configured to display data results of a respective query. The system further includes a memory configured to store data results of multiple queries for the computer application, and a feeder class component installed in a front end of the computer application. The feeder class component is configured to retrieve the data results of multiple queries from the shared memory asynchronously and to provide the retrieved data results of the multiple queries to corresponding query display elements in the user interface for display in parallel. The feeder class component is configured to supply data to a particular query display element in the user interface of the computer application as soon as data for that particular query display element becomes available in the memory.

In one aspect, the invention relates to a computer program product tangibly embodied on a computer-readable medium and including executable code that, when executed, is configured to cause at least one computer system hosting a computer application to provide: a memory to store results of multiple queries processed by the computer application; and a feeder component in a front end display logic layer of the computer application, wherein the feeder component is configured to read the results of the multiple queries stored in the memory asynchronously and to supply the results of the multiple queries in parallel to respective query result display entities in a user interface of the computer application.

According to one embodiment, the computer application includes a back end business logic layer separate from the front end display logic layer, and wherein both the back end business logic layer and the front end display logic layer have access via a service to the memory storing the results of multiple queries.

According to one embodiment, the feeder component is configured to supply data to a particular query result display entity in the user interface of the computer application as soon as data for that particular query result display entity becomes available in the memory.

According to one embodiment, the feeder component in the front end display logic layer of the computer application is implemented as a custom feeder class. According to one embodiment, the at least one computer system hosting the computer application is an ABAP system, and wherein the custom feeder class is an ABAP Object Oriented class.

According to one embodiment, the custom feeder class inherits one or more functions from a standard ABAP feeder basis class.

According to one embodiment, the standard ABAP feeder basis class reads data sequentially and the custom feeder class in contrast implements logic to read data asynchronously.

According to one embodiment, the custom feeder class is coupled to a ping mechanism to help determine latency or delay in a connection to the memory.

According to one embodiment, the custom feeder class is implemented as a single class with individual instantiation for each query result display entity in the user interface of the computer application.

In another aspect, the invention relates to a method, comprising: providing a shared memory to store data results of multiple queries for a computer application, the computer application having a front end layer with functionality supporting a user interface and a separate back end layer with functionality supporting query functions; and providing a front end layer component that is configured to retrieve the data results of multiple queries from the shared memory asynchronously and to provide the retrieved data results of the multiple queries to corresponding query display components in the user interface for display in parallel.

According to one embodiment, the method further comprises providing a service to access the memory storing the data results of multiple queries from the front end layer.

According to one embodiment, providing a front end layer component includes configuring the front end layer component to supply data to a particular query result display entity in the user interface of the computer application as soon as data for that particular query result display entity becomes available in the memory.

According to one embodiment, providing a front end layer component includes implementing the front end layer component as a custom feeder class.

According to one embodiment, at least one computer system hosting the computer application is an ABAP system, and wherein implementing the front end layer component as a custom feeder class includes implementing the custom feeder class as an ABAP Object Oriented class.

According to one embodiment, implementing the front end layer component as a custom feeder class includes configuring the custom feeder class to inherit one or more functions from a standard ABAP feeder basis class.

According to one embodiment, providing a front end layer component includes configuring the front end layer component with logic to read data asynchronously.

According to one embodiment, providing a front end layer component includes coupling the front end layer component to a ping mechanism to help determine latency or delay in a connection to the memory.

According to one embodiment, providing a front end layer component includes implementing the front end layer component as a single class with individual instantiation for each query result display entity in the user interface of the computer application.

In another aspect, the invention relates to a system comprising: at least one processor configured to execute database queries for a computer application; a user interface including a plurality of query display elements, each query display element configured to display data results of a respective query; a memory configured to store data results of multiple queries for the computer application; and a feeder class component installed in a front end of the computer application, wherein feeder class component is configured to retrieve the data results of multiple queries from the shared memory asynchronously and to provide the retrieved data results of the multiple queries to corresponding query display elements in the user interface for display in parallel.

According to one embodiment, the feeder class component is configured to supply data to a particular query display element in the user interface of the computer application as soon as data for that particular query display element becomes available in the memory.

It is understood that one or more of the aforementioned embodiments may be combined as long as the combined embodiments are not mutually exclusive.

The details of one or more implementations are set forth in the accompanying drawings and the description below. Other features will be apparent from the description and drawings, and from the claims.

### Brief description of the drawings

FIG. 1 is a schematic illustration of a system including an example user interface (UI) of a computer application. The UI is configured to display multiple query results in parallel, in accordance with the principles of the present disclosure.
FIG. 2 is an illustration of an example method for displaying multiple query results on a user interface of a computer application in parallel, in accordance with the principles of the present disclosure.
FIG. 3 is a sequence diagram which illustrates operation of the system of FIG. 1 for displaying multiple query results on a user interface of a computer application in parallel, in accordance with the principles of the present disclosure.
FIG. 4 schematically depicts a mobile telecommunication device according to the present disclosure.

Like reference symbols in the various drawings indicate like elements.

### Detailed description

A user interface (UI) of a computer application (e.g., a business application) is configured or constructed to receive and display multiple query results in parallel, in accordance with the principles of the disclosure herein. The queries may, for example, be "BW" queries directed to business information warehouses or databases. The UI, which may be a web-based user interface, may be configured or constructed block-by-block or element-by-element using design tools of a web application user interface technology. For purposes of illustration, the configuration or construction the UI may be described herein with reference to example web application user interface technologies (e.g., Web Dynpro for Java, or Web Dynpro ABAP, etc.) that are developed and made available commercially by the assignee. However, it will be understood that configuration or construction of the UI of the present disclosure is not limited to the particular example web application user interface technologies named herein, but may be implemented for any computer application with other available UI design tools or technologies.

Further, for convenience in description herein, the following terminology relevant to Web Dynpro may be adopted herein:
*Web Dynpro -* Web Dynpro is a client-independent programming model (based on a Model-View-Controller paradigm) for developing user interfaces for web based business applications. The model provides a clear separation of business logic and display logic. A Web Dynpro application runs on the front end and has local or remote access to the back end system via a service. This means that the display logic is contained in the Web Dynpro application, while the business logic and the persistence of the business objects run in the back end system.
*Floorplan Manager (FPM) -* a Web Dynpro Advanced Business Application Programming (ABAP) application that provides a framework for developing new Web Dynpro ABAP application interfaces
*View -* is the central logical layout element in the Web Dynpro application. It is responsible for the presentation logic and for the browser layout.
*Controller -* active part of Web Dynpro application, handles the data flow between the model and the view in both directions.
*Model -* is the interface to the back end system and is responsible for providing data to the entire application. The model represents the data in the back end. *Component -* Reusable UI program package, which mostly contains views and often uses models. A component communicates with other components via component interfaces.
*Generic User Interface Building Blocks (GUIBBs) -* Web Dynpro standard UI components (e.g., Composite Component, Form Component, Form GL2 Component, Form Repeater Component, Hierarchical List (Tree) Component, Launchpad Component, List ATS Component, Personal Object Worklist (POWL) Component, Search Component, Tabbed Component, etc.).
*Feeder class -* A feeder class is an objects class, based on a specific interface (IF_FPM_GUIBB). A feeder class provides a link between the application and a GUIBB. Feeder class implementations are based on a predefined interface definition, providing all necessary methods and corresponding signatures to standardize the communication between the application and the GUIBB. Feeder classes may, for example, include classes for form components, form repeater components, list components, search components, hierarchical list components, launch pad components, etc. Using a GET_DEFINITION method, the feeder class defines the field catalog (the fields that are available for use in the configuration) of the component and supplies the component at runtime with data from the application using the GET_DATA method.
*Web Dynpro Application -* Something runnable (from client application, i.e. web browser) Running a Web Dynpro application means starting a component, navigating to an initial view in an initial window.

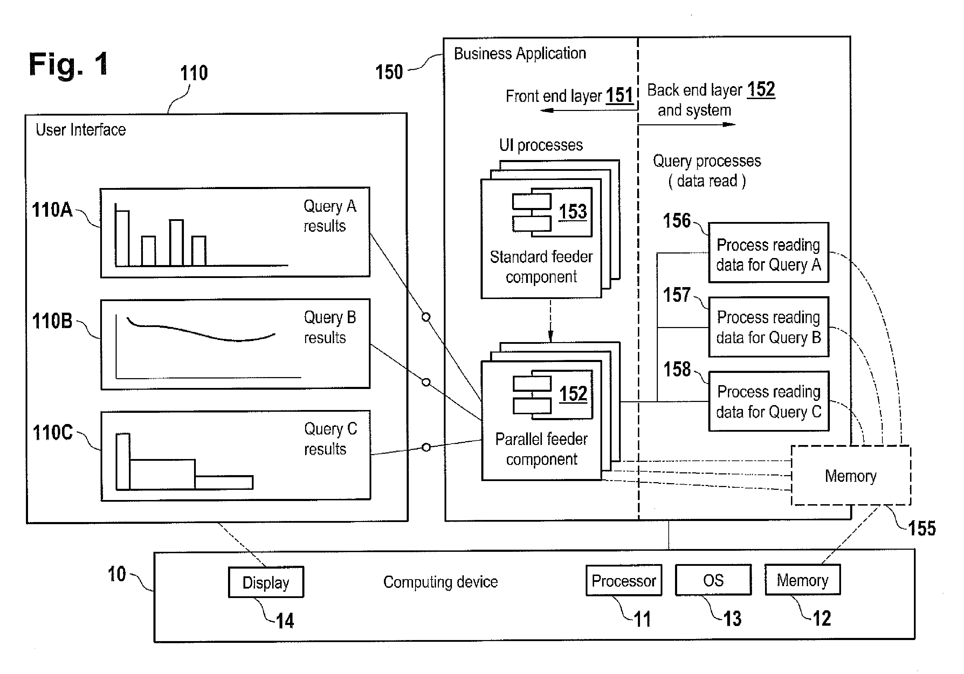

FIG. 1 shows an example user interface (UI) 110 of a computer application (e.g., business application 150), which is configured to display multiple query results in parallel, in accordance with the principles of the present disclosure. The computer application may be configured, for example, to run user queries (e.g., Query A, Query B, and Query C) on one or more databases (not shown) and display results of the queries on UI 110.

UI 110 may, for example, be constructed using standard components (e.g., GUIBBs) and/or custom-developed components for UI display entities (e.g., graphics, charts, lists, forms, trees, etc.), which can be used to display data. In the example shown in FIG. 1, UI 110 may, for example, include three GUIBB graphics or chart entities 110A, 110B, and 110C for displaying data results of Query A, Query B, and Query C, respectively.

UI 110 may be at a front end of business application 150, which may be hosted, for example, on one or more computer systems in a distributed network of computing systems. For visual clarity, all of the various possible components (e.g., databases, network connections, servers, etc.) of the distributed network of computing systems hosting business application 150 are not shown in FIG. 1. Instead, business application 150 is shown simply as being hosted on a representative computing device 10 (which includes a processor 11, a memory 12, an O/S 13, and a display 14). Business application 150 may include a front end layer 151 and a back end layer 152. Front end layer 151 may include display logic and processes (e.g., in a Web Dynpro application) to support UI 110. Back end layer 152 may include business logic, persistence of business objects, and processes to support business functions (queries, report generation, analytics, etc.) of business application 150. Back end layer 152 may be configured to process multiple user-submitted queries and retrieve multiple query results from one or more databases (e.g., a business warehouse (BW)). Back end layer 152 may further be configured to store the multiple query results in a shared memory 155 in a back end system (e.g., a back end ABAP server, computing device 10, or a computing cloud, etc.). Business application 150 may be configured so that both front end processes in front end layer 151 and back end processes in back end layer 152 can independently have local or remote access to the multiple query results stored in shared memory 155 via a service (e.g., a RFC service).

With respect to access to the multiple query results stored in shared memory 155, back end layer 152 may, for example, include data read processes 156, 157 and 158 to retrieve results of Query A, Query B and Query C, respectively. Data read processes 156, 157 and 158 may retrieve the query results for use or processing in business application functions in back end layer 152 independent of any UI display requirements.

Front end layer 151 may in particular include a "parallel" feeder functionality or process (e.g., feeder component 152) that is configured to read query results data stored in shared memory 155 and supply the read query results data in parallel to a plurality of display entities (e.g., entities 110A, 110B, and 110C) in UI 110. The parallel feeder process may be configured to supply data to a particular entity of the plurality of display entities in UI 110 as soon as data for that particular entity becomes available (e.g., in shared memory 155) without regard to the order of the plurality entities in UI 110. By parallelization of the data supply to UI 110, each query result data graphic may be loaded for display (e.g., on entities 110A, 110B, and 110C) as soon as the relevant data becomes available. For example, a display graphic for Query C results may start loading in entity 110C even as a display graphic for Query A results may be loading in entity 110A.

The data supply behavior of the parallel feeder process described above may be contrasted with the data supply behavior of a standard Web Dynpro ABAP feeder component (e.g., ABAP feeder component 153) which supplies data to UI entities one at a time. In the case of the standard ABAP feeder component 153, UI 110 entities (e.g., entities 110A, 110B, and 110C) can be populated only serially or sequentially.

In an example implementation of front end layer 151 in an ABAP system, the parallel feeder functionality or process (e.g., feeder component 152) for reading query results data in parallel may be implemented centrally as a custom feeder class. This custom feeder class may be an ABAP Object Oriented class, which may inherit or reuse some of its functions from an existing standard basis class. The existing standard basis class (e.g., ABAP feeder component 153) may always read data serially or sequentially. However, the custom feeder class of the present disclosure may be new feeder class configured to implement logic to read data asynchronously (or in parallel) by a separate process than the existing standard basis class. The logic to read the query result data in the shared memory asynchronously (or in parallel) may be coupled to a "ping" mechanism which may, for example, help determine latency or delay in the connection to the shared memory. After the process of reading query result data from shared memory is complete, the custom feeder class may provide the read data to the front end UI.

The custom feeder class (e.g., feeder component 152) for reading data in parallel may be instantiated individually for each display entity or component in the UI. Thus, "n" charts in UI 110 may correspond to n feeder instances. However, it will be understood that the n feeder instances are still only one class.

The logic of the custom feeder class (e.g., feeder component 152) may be configured to be independent of any application (e.g., business application) specific functionality. This independence may allow the custom feeder class (e.g., feeder component 152) to be deployed as reusable component in diverse computer applications.

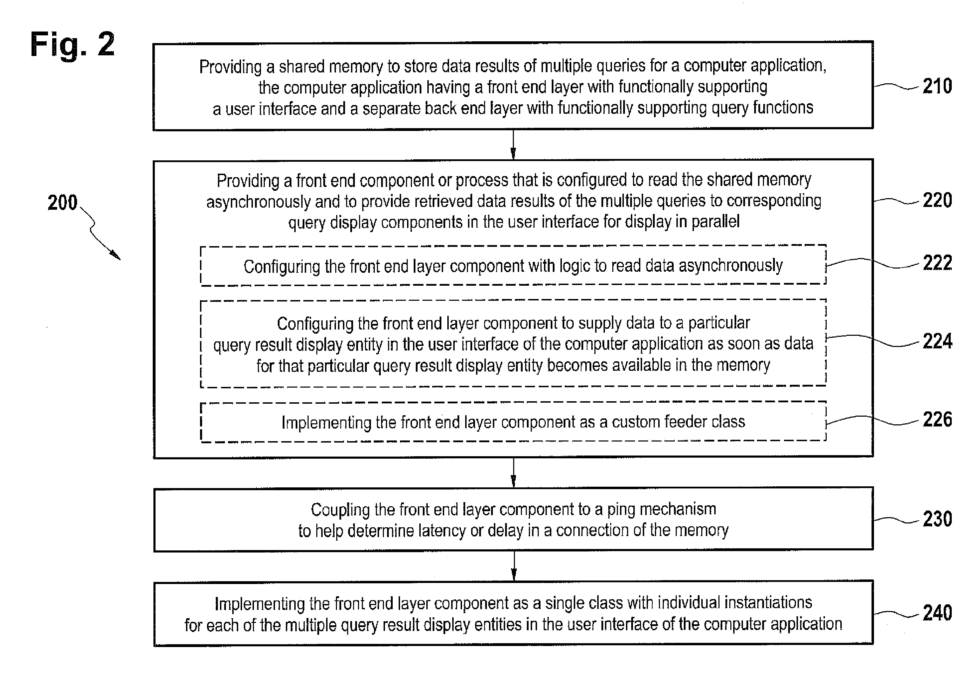

FIG. 2 is a flowchart illustration of an example method 200 for displaying multiple query results in parallel on a user interface (UI) of a computer application, in accordance with the principles of the present disclosure. The computer application (e.g., a business application) may include a front end layer with functionality or processes supporting the UI and a separate back end layer with functionality or processes supporting application functions (e.g., specific business functions, queries, reports, etc.).

Method 200 includes providing a shared memory to store data results of multiple queries (210), and providing a front end component or process that is configured to read the shared memory asynchronously to retrieve the data results of the multiple queries and to provide the retrieved data results of the multiple queries to corresponding query display components in the user interface in parallel (220). Method 200 may include providing services to access the memory storing the data results of multiple queries from both the front end layer and the back end layer.

In method 200, providing a front end component or process to provide the retrieved data results of the multiple queries to corresponding query display components in the user interface in parallel 220 may include configuring the front end layer component with logic to read data asynchronously (222) and configuring the front end layer component to supply data to a particular query result display entity in the user interface of the computer application as soon as data for that particular query result display entity becomes available in the memory (224).

Providing a front end component or process 220 may further include implementing the front end layer component as a custom feeder class (226). In instances in which at least one computer system hosting the computer application is an ABAP system, implementing the front end layer component as a custom feeder class 226 may include implementing the custom feeder class as an ABAP Object Oriented class. The custom feeder class may be configured to inherit one or more functions from a standard ABAP feeder basis class.

Method 200 may further include coupling the front end layer component to a ping mechanism to help determine latency or delay in a connection to the memory (230) and implementing the front end layer component as a single class with individual instantiations for each of the multiple query result display entities in the user interface of the computer application (240).

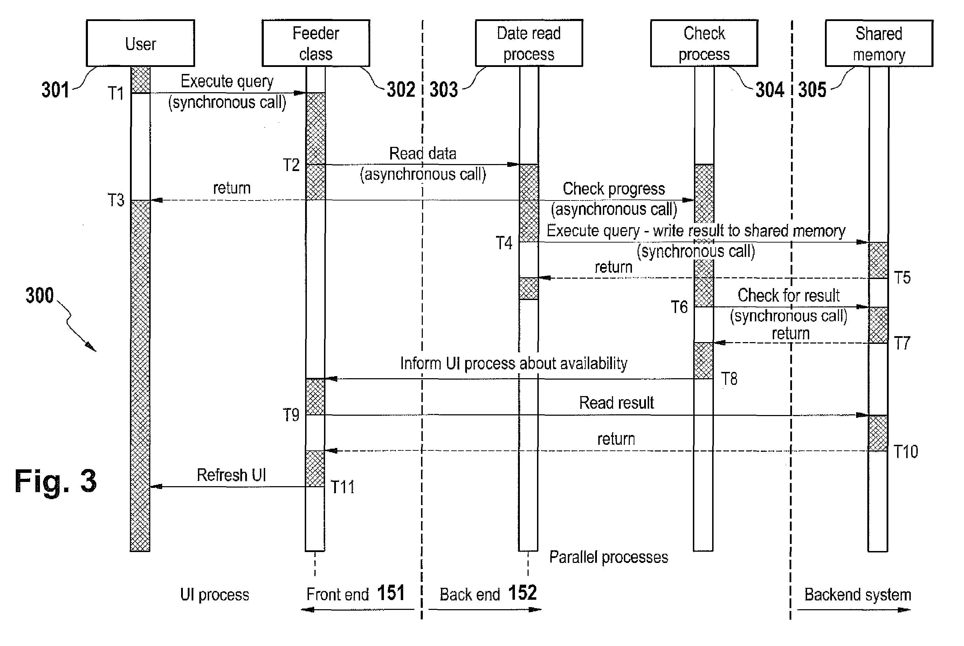

FIG. 3 is a sequence diagram which illustrates a sequence 300 in the operation of the system of FIG. 1, in accordance with the principles of the present disclosure. Sequence 300 shows interactions between actors/objects in the front end (e.g., front end 151) and the back end (e.g., back end 152) of a computer application and the backend system, which may be involved in displaying multiple query results on the user interface of the computer application. In particular, sequence 300 shows interactions between actors/objects: a User 301 (e.g., UI 110), a Feeder Class 302 (e.g., component 152), a Data Read Process 303 (e.g., data read process 156-158), a Check Processes 304 (e.g., a ping mechanism) and a Shared Memory 305 (e.g., memory 155).

In sequence 300 at about time T1, User 301 may (e.g., via user interface 110) submit or trigger one or more queries (i.e., definition of selection or search critera) that may provide data input for one or more display entities or charts (e.g., 110A, 110B, 110C) in UI 110. For visual clarity, only one user-submitted *Execute Query* action is shown in the figure as representative of the multiple queries that may provide data input for the one or more display entities or charts in UI 110. The subsequent actions or steps in sequence 300 shown in FIG. 3 will be understood to be executed per query and corresponding chart. Further, while the subsequent actions or steps are shown in the figure as occuring at seperate times (i.e. T2 to T11) for visual clarity, it will be understood that two or more of the subsequent steps or actions may occur at the same or overlapping times in parallel.

In sequence 300. the user-submitted query at time T1 may be received by Feeder Class 302 (e.g., feeder component 152) via a synchronous call as an instruction to excecute a query. Feeder Class 302 in the front end may then via asynchronous calls (i.e. without waiting for a response) to the back end initiate a *Read Data* task and a *Check Progress* task. The *Read Data* task may be a request to query/read data directed to Data Read Process 303 in the back end; the *Check Progress* task may be a supervisor/check task directed to Check Process 304 in the back end that constantly checks whether the first task has finished the data read (e.g., by a ping request).

Data Read Process 303 in the back end may respond to the *Read Data* task by executing or processing the query (e.g., by querying the data in a BW database) and writing the result to Shared Memory 305 via a synchronous call (*Execute Query-Write Result to Shared Memory*). In practical scenarios, depending on data volume, selection parameters etc., processing the query and writing the query results data to Shared Memory 305 may take from less than a second up to several minutes. Check Process 304 in the back end may respond to the *Check Progress* supervisor/check task process initated by Feeder Class 302 by constantly checking with Shared Memory 305 via a *Check for Result* synchronous call to determine if query results are available. If the query results are available in Shared Memory305, Check Process 304 may inform UI processes in the front end (i.e. Feeder Class 302) of the availability of the query results. The *Check Progress* supervisor/check task process initated by Feeder Class 302 may also responsible to identify "timeouts" i.e. if the Data Read Process fails or surpasses a defined time limit, the *Check Progress* supervisor/check task process may inform the UI process (e.g., Feeder Class 302) of the non availability of the query results. In typical scenarios, the *Check Progress* supervisor/check task process (which may run in parallel with the *Execute Query - Write Result to Shared Memory* process) may have to check the shared memory several times before the query results data becomes available from the *Execute Query - Write Result to Shared Memory* process.

After Feeeder Class 302 receives acknowledgment or information that the query results data is available in Shared Memory 305, it may intiate a *Read Result* process to retrieve the query results data from Shared Memory 305. Further, after retrieving query results data, Feeeder Class 302 may update or refresh the data input for the corresponding display entitiy or chart in UI 110.

Implementations of the various techniques described herein may be implemented in digital electronic circuitry, or in computer hardware, firmware, software, or in combinations of them. Implementations may be implemented as a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program, such as the computer program(s) described above, can be written in any form of programming language, including compiled or interpreted languages, and can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network. Method steps may be performed by one or more programmable processors executing a computer program to perform functions by operating on input data and generating output. Method steps also may be performed by, and an apparatus may be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory may be supplemented by, or incorporated in special purpose logic circuitry.

To provide for interaction with a user, implementations may be implemented on a computer having a display device, e.g., a cathode ray tube (CRT) or liquid crystal display (LCD) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Implementations may be implemented in a computing system that includes a back-end component, e.g., as a data server, or that includes a middleware component, e.g., an application server, or that includes a front-end component, e.g., a client computer having a graphical user interface or a Web browser through which a user can interact with an implementation, or any combination of such back-end, middleware, or front-end components. Components may be interconnected by any form or medium of digital data communication, e.g., a communication network. Examples of communication networks include a local area network (LAN) and a wide area network (WAN), e.g., the Internet.

While certain features of the described implementations have been illustrated as described herein, many modifications, substitutions, changes and equivalents will now occur to those skilled in the art. It is, therefore, to be understood that the appended claims are intended to cover all such modifications and changes as fall within the true spirit of the embodiments.

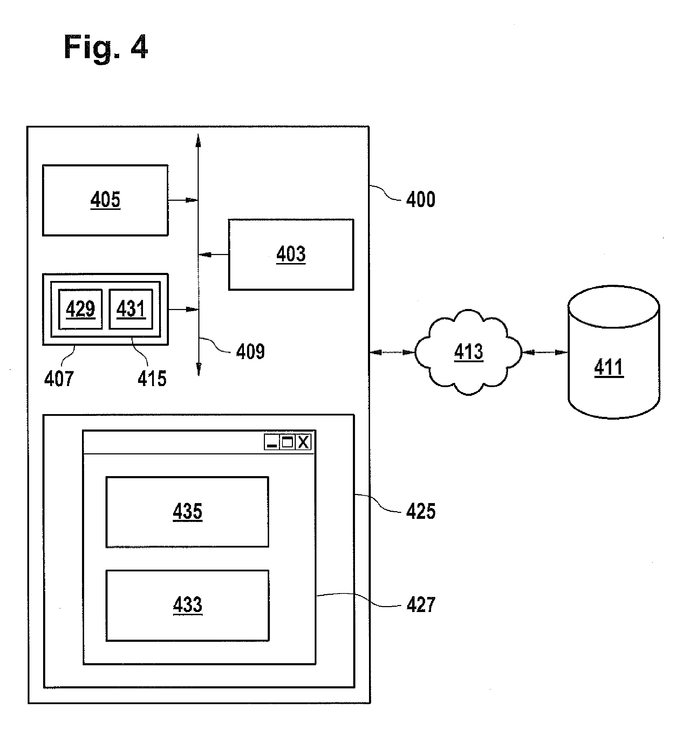

Fig. 4 shows an exemplary mobile telecommunication device 400 in a cellular-digital wireless telecommunication system. The mobile telecommunication device 400 may comprise a processor 403, a transceiver 405, a memory 407 each capable of communicating with one or more components of the mobile telecommunication device 400. For example, all components are coupled to a bidirectional system bus 409.

The processor 403 may be a microprocessor, a single core processor, a multicore processor or the like. The processor 403 may control the operation of the mobile telecommunication device 400. The transceiver 405 can be implemented as a transmitting and receiving component of the mobile telecommunication device 400.

The mobile telecommunication device 400 may further comprise a display 425 which displays characters and images and the like. The display operates in a default display mode.

The mobile telecommunication device 400 may be connected to a database 411 through an access network 413 such as cellular digital system telecommunication network. For example, the mobile telecommunication device 400 may be directly connected to the database 411 or via a base station (not shown) of the cellular-digital wireless telecommunication system. The database 411 may be for example a Domain Name Server (DNS) database that the mobile telecommunication device 400 may query to obtain one or more IP addresses or any suitable database of the cellular-digital wireless telecommunication system. Using the transceiver 405 the mobile telecommunication device 400 is operable to query data stored in the database 411 via the mobile cellular digital telecommunications network 413.

Memory 407 is configured to store a plurality of applications that are executable on the processor 403. For example, the memory 407 may comprise an operating system as well as mobile applications. A mobile application 415 of the mobile applications comprises instructions that, when executed, generate on the display 425 a graphical user interface 427. For example, the display 425 may be a touch sensitive display screen displaying different icons. The icons are each associated with an application that can be performed by the mobile telecommunication device 400. After the user's touch gesture of an icon of the mobile application 415 on the display 425 the mobile application 415 may be started.

The mobile application 415 comprises a frontend module 429 and a backend module 431.

For example, the frontend module 429 may comprise at least part of the front end layer 151 and the backend module 429 may comprise at least part of the back end layer 152.

The frontend module 429 is adapted for receiving at the graphical user interface 427 displayed on the display 425 a user input to perform a search in the database 411. Upon receiving the user input, the frontend module 429 is adapted for generating at least a first and second query using the user input.

For each query of the first and second query the backend module 431 is adapted for generating a first and second data processing task. The first data processing task comprises sending the query to the database using the access network and retrieving and storing the query results in the memory. The second data processing task comprises monitoring the memory content for determining if the query results are available. Further, the backend module 431 is adapted for executing the first and second data processing tasks in parallel. For example, in case the processor 403 comprises a multicore processor, each of the two data processing tasks may be executed on a respective core of the processor 403. In an alternative example, the first and second data processing tasks may be processed using interleaved processing in a single processor e.g. processor 403 such as by time-slicing.

During or after the execution of the first and second data processing tasks the frontend module 429 is adapted for receiving a message from the backend module 431 indicating that at least one of the first and the second query results are available in the memory 407. For example, the reception of the message happens as soon as the first query results are stored in the memory 407 e.g. while the second query results may not be available yet or vice versa.

Upon receiving that message, the frontend module 429 is adapted for determining a runtime delay for the at least one of the first and second queries corresponding to the at least one of the first and the second query results that are available in the memory 407. The runtime delay comprises the elapsed time from the reception of the input until the at least one of the first and the second query results are displayed on the display.

For example, the runtime delay comprises a memory access time, wherein the memory access time is the time required for reading, transmitting from the memory and displaying the at least one of the first and the second query results; wherein the memory access time is estimated using a ping mechanism. The runtime delay may further comprise the elapsed time from the reception of the input until the at least one of the first and the second query results is stored or available in the memory 407. This time may be measured by a timer of the mobile telecommunication device 400.

In case the runtime delay is higher than a predetermined maximum allowable delay the frontend module 429 is adapted for configuring the display 425 to operate in an energy saving display mode.

The display 425 may operate in an energy saving mode by for example using a paging mode function of the graphical user interface 427 that is displayed on the display 425 for displaying first and second display entities; using less power consuming colors in the graphical user interface 427, and/or lowering brightness level of the display 425.

For example, the maximum allowable delay is determined at runtime using the remaining lifetime of the battery of the mobile telecommunication device 400.

For example, for each remaining lifetime value of the battery (e.g. 10%, 80% and the like) of the mobile telecommunication device 400, the maximum allowable delay may be estimated. The estimated maximum allowable delay may be an estimated time from the reception of the input until a test query results are displayed on the display 425. The estimated maximum allowable delay may be estimated in conditions where the mobile telecommunication device 400 is in a normal load mode (e.g. load may refer to the amount of computational work that the mobile telecommunication device 400 performs: 10 to 70% load), e.g. when the mobile telecommunication device 400 is not overloaded by multiple applications running at the same time. The test query may be one of the at least one of the first and the second queries. For example, those estimations using the test query may be performed in a test period before applying the method of the present disclosure. In another example, those estimations may be performed using simulation based on a model of the system described in FIG. 4. The resulting maximum allowable delay values may be stored in association with the corresponding remaining lifetime values in a table in the memory 407.

In an alternative example, the maximum allowable delay may be a preset value. That preset value may be for example an estimated time from the reception of the input until a test query results are displayed on the display 425.

Next, the frontend module 429 is adapted for displaying on the display 425 (i.e. on the graphical user interface 427 of the display 425) at least a first and second display entities 433, 435 for displaying the first and second query results using the default display mode or the energy saving display mode in case the runtime delay is higher than the predetermined maximum allowable delay. In parallel to displaying the two entities 433 and 435 the first and second query results are supplied to respective query result display entities 433 and 435. For example, in case the first query results are available e.g. while the second query results are not yet available, the two display entities 433, 435 are displayed at the same time and the first query results are supplied to the display entity 433, while the display entity 435 may be empty and as soon as the second query results are available in the memory 407 they are supplied to the display entity 435.

## Claims

1. A method for operating a mobile telecommunications device (400) for a cellular-digital wireless telecommunication system, the cellular digital wireless telecommunication system comprising a database (411) that is connected to the mobile communications device (400) via an access network of the cellular digital wireless telecommunication system; the mobile telecommunication device (400) comprising a display (425) and a memory (407); wherein the display (425) operates in a default display mode; the method comprising:
- receiving at a graphical user interface (427) displayed on the display (425) a user input to perform a search in the database (411);
- generating, by a frontend module (429) of the mobile telecommunication device (400), at least a first and second query using the user input;
- for each query of the first and second query:
o generating, by a backend module (431) of the telecommunication device (400), a first and second data processing task, wherein the first data processing task comprises sending the query to the database (411) using the access network and retrieving and storing the query results in the memory (407), wherein the second data processing task comprises monitoring the memory content for determining if the query results are available; and
o executing, by the backend module (431), the first and second data processing tasks in parallel;
- receiving, by the frontend module (429) a message from the backend module (431) indicating that at least one of the first and the second query results are available in the memory (407);
- determining, by the frontend module (429), a runtime delay for the at least one of the first and second queries, wherein the runtime delay comprises the elapsed time from the reception of the input until the at least one of the first and the second query results are displayed on the display (425);
- in case the runtime delay is higher than a predetermined maximum allowable delay configuring, by the frontend module (429), the display (425) to operate in an energy saving display mode;
- displaying, by the frontend module (429), on the display (425) at least a first and second display entities (433, 435) for displaying the first and second query results using the default display mode or the energy saving display mode in case the runtime delay is higher than the predetermined maximum allowable delay; and in parallel supplying the first and second query results to respective query result display entities (433, 435).

2. The method of claim 1, wherein displaying using the energy saving display mode comprises at least one of:
- using a paging mode function of the graphical user interface for displaying first and second display entities;
- using less power consuming colors in the graphical user interface; and
- lowering brightness level of the display.

3. The method of claim 1 or 2, wherein the mobile telecommunication device is adapted to run an Advanced Business Application Programming, ABAP, wherein each of the first and second queries comprises an ABAP query.

4. The method of any of the preceding claims, wherein the runtime delay comprises a memory access time, wherein the memory access time is the time required for reading, transmitting from the memory and displaying the at least one of the first and the second query results; wherein the memory access time is estimated using a ping mechanism.

5. The method of any of preceding claims, wherein the mobile telecommunication device comprises a battery powered mobile device, wherein the maximum allowable delay is determined at runtime using the remaining lifetime of the battery.

6. The method of any of preceding claims, wherein the display is a touch sensitive display screen.

7. The method of any of preceding claims, wherein the first and second data processing tasks are executed as an atomic operation.

8. A mobile telecommunication device (400) for a cellular-digital wireless telecommunication system, the cellular digital wireless telecommunication system comprising a database (411) that is connected to the mobile communications device (400) via an access network of the cellular digital wireless telecommunication system; the mobile telecommunication device (400) comprising a display (425), a memory, a frontend module (429) and a backend module (431):
- the frontend module (429) is adapted for receiving at a graphical user interface (427) displayed on the display (425) a user input to perform a search in the database (411);
- the frontend module (429) is adapted for generating at least a first and second query using the user input;
- for each query of the first and second query:
o the backend module (431) is adapted for generating a first and second data processing task, wherein the first data processing task comprises sending the query to the database (411) using the access network and retrieving and storing the query results in the memory (407), wherein the second data processing task comprises monitoring the memory content for determining if the query results are available; and
∘ the backend module (431) is adapted for executing the first and second data processing tasks in parallel;
- the frontend module (429) is adapted for receiving a message from the backend module (431) indicating that at least one of the first and the second query results are available in the memory (407);
- the frontend module (429) is adapted for determining a runtime delay for the at least one of the first and second queries, wherein the runtime delay comprises the elapsed time from the reception of the input until the at least one of the first and the second query results are displayed on the display (425);
- in case the runtime delay is higher than a predetermined maximum allowable delay the frontend module (429) is adapted for configuring the display (425) to operate in an energy saving display mode;
- the frontend module (429) is adapted for displaying on the display (425) at least a first and second display entities (433, 435) for displaying the first and second query results using the default display mode or the energy saving display mode in case the runtime delay is higher than the predetermined maximum allowable delay; and in parallel supplying the first and second query results to respective query result display entities (433, 435).

## Patentansprüche

1. Verfahren zum Betreiben einer Mobiltelekommunikationsvorrichtung (400) für ein zellulares-digitales drahtloses Telekommunikationssystem, wobei das zellulare digitale drahtlose Telekommunikationssystem eine Datenbank (411) aufweist, die über ein Zugangsnetz des zellularen digitalen drahtlosen Telekommunikationssystems mit der Mobiltelekommunikationsvorrichtung (400) verbunden ist; wobei die Mobiltelekommunikationsvorrichtung (400) ein Display (425) und einen Speicher (407) aufweist; wobei die Anzeige (425) in einem Vorgabeanzeigemodus betrieben wird; wobei das Verfahren beinhaltet:
- Erhalten, an einer grafischen Benutzeroberfläche (427), die auf der Anzeige (425) angezeigt wird, einer Benutzereingabe zum Durchführen einer Suche in der Datenbank (411) ;
- Erzeugen, durch ein Front-End-Modul (429) der Mobiltelekommunikationsvorrichtung (400), von wenigstens einer ersten und einer zweiten Anfrage unter Verwendung der Benutzereingabe;
- für jede Anfrage der ersten und zweiten Anfrage:
∘ Erzeugen, durch ein Back-End-Modul (431) der Telekommunikationsvorrichtung (400), einer ersten und einer zweiten Datenverarbeitungsaufgabe, wobei die erste Datenverarbeitungsaufgabe das Senden der Anfrage an die Datenbank (411) unter Verwendung des Zugangsnetzes und das Abrufen und Speichern der Anfrageergebnisse im Speicher (407) beinhaltet, wobei die zweite Datenverarbeitungsaufgabe das Überwachen des Speicherinhalts zum Ermitteln, ob die Anfrageergebnisse verfügbar sind, beinhaltet, und
o paralleles Ausführen der ersten und der zweiten Datenverarbeitungsaufgabe durch das Back-End-Modul (431) ;
- Erhalten einer Nachricht von dem Back-End-Modul (431) durch das Front-End-Modul (429), die andeutet, dass wenigstens eines der Ergebnisse der ersten und zweiten Anfrage im Speicher (407) verfügbar ist;
- Ermitteln, durch das Front-End-Modul (429), einer Laufzeitverzögerung für die wenigstens eine der ersten und zweiten Anfrage, wobei die Laufzeitverzögerung die seit dem Erhalt der Eingabe bis zum Anzeigen des wenigstens einen der Ergebnisses der ersten und zweiten Anfrage in der Anzeige (425) verstrichene Zeit umfasst,
- Konfigurieren der Anzeige (435), falls die Laufzeitverzögerung höher als eine vorbestimmte maximal zulässige Verzögerung ist, durch das Front-End-Modul (429) zum Betrieb in einem energiesparenden Anzeigemodus;
- Anzeigen auf der Anzeige (425), durch das Front-End-Modul (429), wenigstens einer ersten und einer zweiten Anzeigenentität (433, 435) zum Anzeigen der Ergebnisse der ersten und zweiten Anfrage unter Verwendung des Vorgabeanzeigemodus oder des energiesparenden Anzeigemodus, falls die Laufzeitverzögerung höher als die vorbestimmte maximal zulässige Verzögerung ist, und parallel Zuführen der Ergebnisse der ersten und zweiten Anfrage an jeweilige Anfrageergebnisanzeigeentitäten (433, 435).

2. Verfahren nach Anspruch 1, wobei das Anzeigen unter Verwendung des energiesparenden Anzeigemodus wenigstens eines der Folgenden beinhaltet:
- Verwenden einer Pagingmodusfunktion der grafischen Benutzeroberfläche zum Anzeigen erster und zweiter Anzeigeentitäten;
- Verwenden von weniger Strom verbrauchenden Farben in der grafischen Benutzeroberfläche und
- Verringern des Helligkeitsgrads der Anzeige.

3. Verfahren nach Anspruch 1 oder 2, wobei die Mobiltelekommunikationsvorrichtung ausgeführt ist, um ein Advanced Business Application Programming, ABAP, auszuführen, wobei die erste und die zweite Anfrage jeweils eine ABAP-Anfrage umfasst.

4. Verfahren nach einem der vorhergehenden Ansprüche, wobei die Laufzeitverzögerung eine Speicherzugriffszeit beinhaltet, wobei die Speicherzugriffszeit die Zeit ist, die zum Lesen, Übertragen aus dem Speicher und Anzeigen des wenigstens einen der Ergebnisse der ersten und der zweiten Anfrage erforderlich ist; wobei die Speicherzugriffszeit unter Verwendung eines Ping-Mechanismus geschätzt wird.

5. Verfahren nach einem der vorhergehenden Ansprüche, wobei die Mobiltelekommunikationsvorrichtung eine batteriebetriebene Mobilvorrichtung umfasst, wobei die maximal zulässige Verzögerung bei Laufzeit unter Verwendung der verbleibenden Lebensdauer der Batterie ermittelt wird.

6. Verfahren nach einem der vorhergehenden Ansprüche, wobei die Anzeige ein berührungsempfindlicher Bildschirm ist.

7. Verfahren nach einem der vorhergehenden Ansprüche, wobei die erste und die zweite Datenverarbeitungsaufgabe als eine atomische Operation ausgeführt werden.

8. Mobiltelekommunikationsvorrichtung (400) für ein zellulares-digitales drahtloses Telekommunikationssystem, wobei das zellulare digitale Telekommunikationssystem eine Datenbank (411) aufweist, die über ein Zugangsnetz des zellularen digitalen drahtlosen Telekommunikationssystems mit der Mobiltelekommunikationsvorrichtung (400) verbunden ist; wobei die Mobiltelekommunikationsvorrichtung (400) ein Display (425), einen Speicher, ein Front-End-Modul (429) und ein Back-End-Modul (431) aufweist;
- das Front-End-Modul (429) zum Erhalten, an einer grafischen Benutzeroberfläche (427), die auf der Anzeige (425) angezeigt wird, einer Benutzereingabe zum Durchführen einer Suche in der Datenbank (411) ausgeführt ist;
- das Front-End-Modul (429) zum Erzeugen von wenigstens einer ersten und einer zweiten Anfrage unter Verwendung der Benutzereingabe ausgeführt ist;
- für jede Anfrage der ersten und zweiten Anfrage:
o das Back-End-Modul (431) zum Erzeugen einer ersten und einer zweiten Datenverarbeitungsaufgabe ausgeführt ist, wobei die erste Datenverarbeitungsaufgabe das Senden der Anfrage an die Datenbank (411) unter Verwendung des Zugangsnetzes und das Abrufen und Speichern der Anfrageergebnisse im Speicher (407) beinhaltet, wobei die zweite Datenverarbeitungsaufgabe das Überwachen des Speicherinhalts zum Ermitteln, ob die Anfrageergebnisse verfügbar sind, beinhaltet, und
∘ das Back-End-Modul (431) zum parallelen Ausführen der ersten und der zweiten Datenverarbeitungsaufgabe ausgeführt ist;
- das Front-End-Modul (429) zum Erhalten einer Nachricht von dem Back-End-Modul (431) ausgeführt ist, die andeutet, dass wenigstens eines der Ergebnisse der ersten und zweiten Anfrage im Speicher (407) verfügbar ist;
- das Front-End-Modul (429) zum Ermitteln einer Laufzeitverzögerung für die wenigstens eine der ersten und zweiten Anfrage ausgeführt ist, wobei die Laufzeitverzögerung die seit dem Erhalt der Eingabe bis zum Anzeigen der Ergebnisse der wenigstens einen der ersten und zweiten Anfrage in der Anzeige (425) verstrichene Zeit umfasst,
- das Front-End-Modul (429), falls die Laufzeitverzögerung höher als eine vorbestimmte maximal zulässige Verzögerung ist, zum Konfigurieren der Anzeige (425) zum Betrieb in einem energiesparenden Anzeigemodus ausgeführt ist;
- das Front-End-Modul (429) zum Anzeigen auf der Anzeige (425) wenigstens einer ersten und einer zweiten Anzeigenentität (433, 435) zum Anzeigen der Ergebnisse der ersten und zweiten Anfrage unter Verwendung des Vorgabeanzeigemodus oder des energiesparenden Anzeigemodus, falls die Laufzeitverzögerung höher als die vorbestimmte maximal zulässige Verzögerung ist, und parallel Zuführen der Ergebnisse der ersten und zweiten Anfrage an jeweilige Anfrageergebnisanzeigeentitäten (433, 435) ausgeführt ist.

## Revendications

1. Procédé de fonctionnement d'un dispositif mobile de télécommunications (400) pour un système de télécommunication sans fil cellulaire numérique, le système de télécommunication sans fil cellulaire numérique comprenant une base de données (411) qui est connectée au dispositif mobile de communication (400) par l'intermédiaire d'un réseau d'accès du système de télécommunication sans fil cellulaire numérique ; le dispositif mobile de télécommunication (400) comprenant un écran (425) et une mémoire (407) ; dans lequel l'écran (425) fonctionne dans un mode d'affichage par défaut, le procédé comprenant :
- la réception de l'entrée d'un utilisateur sur une interface utilisateur graphique (427) affichée sur l'écran (425) afin de réaliser une recherche dans la base de données (411) ;
- la création, par un module de premier plan (429) du dispositif mobile de télécommunication (400), d'au moins une première et une seconde requête en utilisant l'entrée utilisateur ;
- pour chacune des requêtes parmi les première et seconde requêtes :
∘ la création, par un module d'arrière plan (431) du dispositif mobile de télécommunication (400), d'une première et d'une seconde tâche de traitement des données, où la première tâche de traitement des données comprend l'envoi d'une requête à la base de données (411) en utilisant le réseau d'accès, et en récupérant et en stockant les résultats de la requête dans la mémoire (407), où la seconde tâche de traitement des données comprend la surveillance du contenu de la mémoire afin de déterminer si les résultats de la requête sont disponibles ; et
∘ l'exécution en parallèle, par le module d'arrière plan (431), des première et seconde tâches de traitement des données.
- la réception, par le module de premier plan (429) d'un message provenant du module d'arrière plan (431) indiquant qu'au moins l'un des résultats des première et seconde requêtes est disponibles dans la mémoire (407) ;
- la détermination, par le module de premier plan (429), du délai d'exécution pour l'au moins une des première et seconde requêtes, où le délai d'exécution comprend le temps écoulé à partir de la réception de l'entrée jusqu'à ce que l'au moins un des résultats des première et seconde requêtes soit affiché sur l'écran (425) ;
- au cas où le délai d'exécution serait supérieur au délai maximum autorisé prédéterminé par le module de premier plan (429), l'écran (425) est configuré pour fonctionner dans un mode d'affichage économe en énergie ;
- l'affichage, par le module de premier plan (429), sur l'écran (425) d'au moins une première et une seconde entités d'affichage (433, 435) afin d'afficher les résultats des première et seconde requêtes en utilisant le mode d'affichage par défaut ou le mode d'affichage économe en énergie dans le cas où le délai d'exécution est supérieur au délai maximum autorisé prédéterminé ; et, en parallèle, fournir les résultats des première et seconde requêtes aux entités respectives d'affichage (433, 435) du résultat de la requête.

2. Procédé selon la revendication 1, dans lequel l'affichage en utilisant le mode d'affichage qui est économe en énergie comprend au moins l'une des utilisations parmi :
- l'utilisation de la fonction de mode de pagination de l'interface utilisateur graphique pour afficher les première et seconde entités d'affichage ;
- l'utilisation de couleurs moins consommatrices d'énergie dans l'interface utilisateur graphique ; et
- l'abaissement du niveau de luminosité de l'affichage.

3. Procédé selon les revendications 1 ou 2, dans lequel le dispositif de télécommunication mobile est adapté pour exécuter l'Advanced Business Application Programming, ABAP, où chacune des première et seconde requêtes comprend une requête ABAP.

4. Procédé selon l'une quelconque des revendications précédentes, dans lequel le délai d'exécution comprend un temps d'accès à la mémoire, dans lequel le temps d'accès à la mémoire est le temps nécessaire pour lire, transmettre à partir de la mémoire et afficher l'au moins un des résultats des première et seconde requêtes ; dans lequel le temps d'accès à la mémoire est estimé en utilisant l'instrument du ping.

5. Procédé selon l'une quelconque des revendications précédentes, dans lequel le dispositif de télécommunication mobile comprend un dispositif mobile d'alimentation par batterie, dans lequel le délai maximum autorisé est déterminé au cours de l'exécution en utilisant la durée restante d'utilisation de la batterie.

6. Procédé selon l'une quelconque des revendications précédentes, dans lequel l'affichage est un écran d'affichage tactile.

7. Procédé selon l'une quelconque des revendications précédentes, dans lequel les première et seconde tâches de traitement des données sont exécutées comme une opération atomique.

8. Dispositif de télécommunication mobile (400) pour un système de télécommunication sans fil cellulaire numérique, le système de télécommunication sans fil cellulaire numérique comprenant une base de données (411) qui est connectée au dispositif mobile de communication (400) par l'intermédiaire d'un réseau d'accès du système de télécommunication sans fil cellulaire numérique ; le dispositif mobile de télécommunication (400) comprenant un écran (425), une mémoire, un module de premier plan (429) et un module d'arrière (431) :
- le module de premier plan (429) est adapté pour recevoir sur une interface utilisateur graphique (427) affichée sur l'écran (425) une entrée utilisateur afin de réaliser une recherche dans la base de données (411) ;
- le module de premier plan (429) est adapté pour créer au moins une première et une seconde requête en utilisant l'entrée utilisateur ;
- pour chacune des requêtes parmi la première et de la seconde requête :
∘ le module d'arrière plan (431) est adapté pour créer une première et une seconde tâche de traitement des données, dans lequel la première tâche de traitement des données comprend l'envoi de la requête à la base de données (411) en utilisant le réseau d'accès et en récupérant et en stockant les résultats de la requête dans la mémoire (407), dans lequel la seconde tâche de traitement des données comprend la surveillance du contenu de la mémoire pour déterminer si les résultats de la requête sont disponibles ; et
∘ le module d'arrière plan (431) est adapté pour exécuter en parallèle les première et seconde tâches de traitement des données ;
- le module de premier plan (429) est adapté pour recevoir un message provenant du module d'arrière plan (431) indiquant qu'au moins l'un des résultats des première et seconde requêtes est disponible dans la mémoire (407) ;
- le module de premier plan (429) est adapté pour déterminer le délai d'exécution pour l'au moins une des première et seconde requêtes, dans lequel le délai d'exécution comprend le temps écoulé à partir de la réception de l'entrée jusqu'à ce que l'au moins un des résultats des première et seconde requêtes soit affiché sur l'écran (425) ;
- au cas où le délai d'exécution serait supérieur au délai maximum autorisé prédéterminé, le module de premier plan (429) est adapté pour configurer l'écran (425) afin de fonctionner dans un mode d'affichage économe en énergie ;
- le module de premier plan (429) est adapté pour l'affichage sur l'écran (425) d'au moins une première et une seconde entités d'affichage (433, 435) afin d'afficher les résultats des première et seconde requêtes en utilisant le mode d'affichage par défaut ou le mode d'affichage économe en énergie dans le cas où le délai d'exécution est supérieur au délai maximum autorisé prédéterminé ; et, en parallèle, fournir les résultats des première et seconde requêtes aux entités respectives d'affichage du résultat de la requête (433, 435).
